# EUROPÄISCHE PATENTSCHRIFT

(11) **EP 3 391 736 B1**
(45) Veröffentlichungstag und Bekanntmachung des Hinweises auf die Patenterteilung: **22.06.2022**
(21) Anmeldenummer: 18168069.5
(22) Anmeldetag: 18.04.2018
(51) Int. Cl.: A01G 9/08

(54) **LINEARKOMPAKTE VORRICHTUNG MIT QUERLAUFENDEM SUBSTRATELEVATOR, ZUM BEFÜLLEN UND BEARBEITEN VON TÖPFEN**
LINEAR COMPACT DEVICE WITH TRANSVERSE SUBSTRATE ELEVATOR, FOR FILLING AND PROCESSING OF POTS
DISPOSITIF LINÉAIRE COMPACT POURVU D'ÉLÉVATEUR DE SUBSTRATS TRANSVERSAL, DESTINÉ AU REMPLISSAGE ET À L'USINAGE DES POTS

(30) Priorität: 18.04.2017 DE 202017002026 U
(43) Veröffentlichungstag der Anmeldung: 24.10.2018
(73) Patentinhaber: KERN & DRIVE GmbH, 9012 Györ - Menföcsanak (HU)
(72) Erfinder: MESZAROS, Arpad G., 89075 Ulm (DE)
(74) Vertreter: Stolmár & Partner Patentanwälte PartG mbB

(56) Entgegenhaltungen:
- DE-U1- 8 614 643
- FR-A1- 2 512 324
- JP-U- H0 615 447
- NL-A- 8 007 008
- US-A- 2 721 684
- US-A- 3 587 675
- US-A- 5 284 190

## Beschreibung

### Gebiet der Erfindung

Die vorliegende Erfindung betrifft eine linearkompakte Vorrichtung mit querlaufendem Substratelevator, zum Befüllen und Bearbeiten von Töpfen, wobei die Laufrichtung der Elevatorschaufeln quer zur Bewegungsrichtung des Substrates im Substratbehälter gerichtet ist und dadurch eine genaue Messung der Substratmenge, die aus dem Erdbunker in dem Elevator transportiert wird, ermöglicht.

### Stand der Technik

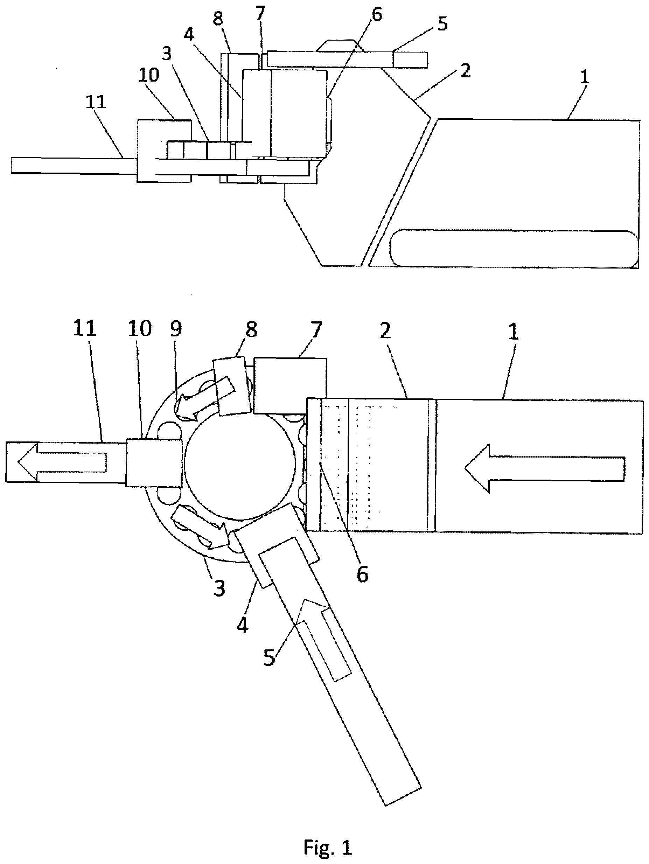

Zum Befüllen von Töpfen mit Substrat werden konventionell Topffüllmaschinen, kurz Topfmaschinen genannt, gemäß dem in Fig.1 gezeigten Stand der Technik, verwendet.

Topfmaschinen gemäß dem Stand der Technik weisen Topftransportsysteme auf, die Drehkränze oder umlaufende Ketten umfassen. DE 20 2005 019 127 U1 offenbart eine Topfmaschine, die eine während des Eintopfbetriebes umlaufende Fördereinrichtung aufweist, bei der es sich um eine Art Karussell bzw. Positioniertisch handelt. DE 203 04 458 U1 offenbart eine Vorrichtung, die zwei Transporteinrichtungen vorsieht, die um eine annähernd vertikale Achse laufen. Die Transporteinrichtungen sind als Drehkränze ausgebildet. Die in DE 201 20 804 U1 offenbarte Vorrichtung sieht zwei um eine annähernd vertikale Achse umlaufende Transporteinrichtungen vor, die als Drehtische, Drehkränze oder als um annähernd vertikale Achsen umlaufende Kettenförderer ausgebildet sind.

US 2 721 684 A offenbart eine Vorrichtung zum Befüllen von Pflanztöpfen, welche zumindest einen Substratelevator umfasst, welcher quer angeordnet ist. US 5 284 190 A offenbart einen Bunker, mit einer an seinem Boden angebrachten Förderschnecke, welche das Substrat ein einer zur Förderrichtung eines Substratelevators senkrechten Richtung bewegt. DE 86 14 643 U1 offenbart eine Füllvorrichtung, welche einen Substratbunker aufweist, welcher unterhalb eines Arbeitstischs zum Befüllen von Töpfen angeordnet ist. Die Vorrichtung weist weiterhin einen Substratelevator auf, welcher das Substrat aus dem Bunker nach oben fördert. FR 2 512 324 A1 offenbart einen automatischen Blumentopfverteiler für eine Topfmaschine, welcher einen Elektromagneten verwendet, um die Freigabe eines in einem Trichter gehaltenen Stapel zu ermöglichen. US 3 587 675 A offenbart eine Vorrichtung mit einem Substratbunker. Durch die schräg verlaufenden Seitenwände werden Bewegungen im Substrat erzeugt, welche schräg zur Förderrichtung des Substratelevators verlaufen. NL 8 007 008 A offenbart eine Topffüllmaschine zum Befüllen mit Erde, wobei die Maschine einen offenen Rahmen hat, der sich über einem Trichterboden hin- und herbewegt und an die Erde an einen Elevator liefert. Eine weitere Füllvorrichtung ist aus der JPH0615447U bekannt.

Topffüllmaschinen gemäß dem Stand der Technik umfassen einen Substratbehälter mit Band, auch Erdbehälter genannt, einen Substratelevator mit Schaufeln, auch Elevator genannt, ein Topftransportsystem mit Topfaufnahme für Töpfe in Form eines runden Drehtisches, auch Drehkranz genannt, oder in Form einer herumlaufenden Kette, die entweder über einer Konsole oder direkt über dem offenen Erdbehälter läuft. Das Transportsystem kann taktend oder kontinuierlich laufen.

Das Topftransportsystem umfasst ein Topfmagazin mit Topfspeicherband um leere Töpfe zu speichern und diese einzeln oder mehrfach in die Aufnahmen des Transportsystems einzusetzen, eine Mündung des Substratelevators (auch Erdtrichter genannt) um die Töpfe mit Substrat zu befüllen, eine Bohrvorrichtung um in die Erde des befüllten Topfes ein Loch für die Jungpflanzen zu bohren, ein Düngerdosiergerät um bei Bedarf Dünger in die Erde der befüllten Töpfe zu dosieren, eine Topfübergabe um die gefüllten Töpfe aus der Maschine zu entfernen und ein Transportband um die Töpfe weiter zu transportieren.

In bevorzugten Ausführungsformen ist am Topftransportsystem ein Arbeitsbereich für die manuelle oder automatische Bepflanzung der Töpfe mit Jungpflanzen vorgesehen.

In einer anderen Ausführungsform werden die Töpfe am Transportband nach der Topfübergabe manuell oder automatisch mit Jungpflanzen bepflanzt.

Aus dem befüllten Substratbehälter wird Erde mittels eines Bandes in Richtung Elevator transportiert und auf die in entgegengesetzter Richtung laufenden Schaufeln des Elevators gepresst. In den Substratelevator mündende Schaufeln kratzen die Erde nach oben und fördern diese über das Topftransportsystem, wodurch Erde durch die Mündung des Elevators über den Töpfen ausgeschüttet wird. Der Erdüberschuss fällt neben dem Topf, je nach Konstruktion in den Elevator oder in den Erdbehälter zurück. Mit Hilfe der Bohrvorrichtung werden Bohrungen in die in Töpfe gefüllte Erde zum manuellen oder automatisierten Einsetzen der Jungpflanzen gebohrt. Das Düngerdosiergerät dosiert nach Bedarf Dünger in die Erde der befüllten Töpfe. Am Arbeitsbereich werden die mit Erde befüllten Töpfe entweder manuell oder durch eine Pflanzmaschine mit Jungpflanzen bestückt. Zum Schluss hebt die Topfübergabe die auf dem Transportband bearbeiteten Töpfe nacheinander oder gleichzeitig aus dem Topftransportsystem heraus.

Bei der Verwendung zurzeit eingesetzter Topffüllmaschinen gemäß dem Stand der Technik ermöglichen die zur Erdbewegungsrichtung im Substratbehälter immer frontal laufenden Elevatorschaufeln keine Messung der Substratmenge, die von dem Erdbehälter in den Elevator gefördert wird. Manuelle Einstellungen und Umstellungen sind, z.B. bei Topfgrößenänderung oder Wechsel des Bohrers erforderlich, was für die Verwendung dieser Topffüllmaschinen des Stands der Technik im Hinblick auf die praktische Anwendbarkeit vom Bediener mühsames und zeitaufwändiges Adjustieren und technische Befähigung verlangt, da eine genaue Messung der Substratmenge, die von dem Erdbehälter in dem Elevator gefördert wird, unter Verwendung eines frontal laufenden Elevatorschaufelsystems nicht möglich ist.

### Beschreibung der Erfindung

Mit der vorliegenden Erfindung soll eine Topffüllmaschine bereitgestellt werden, die ein lineares Topftransportsystems mit linear angeordneten Bearbeitungsstationen ermöglicht.

Gemäß der vorliegenden Erfindung wird eine linearkompakte Vorrichtung mit querlaufendem Substratelevator zum Befüllen und Bearbeiten von Töpfen bereitgestellt, die folgende linear angeordnete Bearbeitungsstationen umfasst:
einen Topfmagazinbereich **15,** Bandspeicherbereich **16,** Füllbereich **18,** Bohrbereich **19,** ein Düngerdosiergerät **20** und eine Topfübergabe. Die lineare Ausrichtung wird durch eine Änderung der Laufrichtung der Schaufeln **23** im Bereich des Elevators **17** quer zur Bewegungsrichtung des Substrates im Substratbehälter **12** und zur Hauptachse der Topffüllmaschine erreicht. Es wird erfindungsgemäß die Substratmenge vor dem Eintritt des Substrats in den Elevator an der dafür ausgelegten Mündung des Substratbehälters durch einen höhenregelbaren Schieber und durch Messung der Bewegungsgeschwindigkeit des Substrates im Substratbehälter gemessen.

Der Begriff "quer zur Bewegungsrichtung des Substrates im Substratbehälter" wird erfindungsgemäß definiert als von einer zur anderen Seite im Substratbehälter in einem Winkel von 5° bis 175° verlaufend, vorzugsweise in einem Winkel von 10 bis 150°, vorzugsweise in einem Winkel von 30° bis 120°, am bevorzugtesten in einem Winkel von genau 90°, also perpendikular zur Richtung des Geschwindigkeitsvektors des Substrates im Erdbehälter. Der Elevator wird in einer toroidalen Form ausgeführt und Erde ist vom Substratbehälter **12** in den Elevator **17** einschüttbar.

In einer weiteren Ausführungsform der linearkompakten Vorrichtung ist das Transportband des Substratbehälters **12** höher angeordnet als der Boden des Elevators **17.**

In einer weiteren Ausführungsform der linearkompakten Vorrichtung umfasst der Substratbehälter **12** einen fixierten oder vertikal oder horizontal einstellbaren Schieber **13** für die Dosierung der Substratmenge. Von Vorteil ist, dass die Messung der Substratmenge vor dem Eintritt des Substrats im Elevator an der dafür ausgelegten Mündung des Substratbunkers **14** durch einen höhenregelbaren Schieber **13** und durch Messung der Bewegungsgeschwindigkeit des Substrates im Substratbehälter **12** erfolgt, sodass sich der manuelle Aufwand zum Adjustieren der Substratmenge an die Topfgröße reduziert.

Weitere Vorteile der vorliegenden Erfindung sind aus der detaillierten Beschreibung und den Zeichnungen ersichtlich.

### Beschreibung der Zeichnungen:

Fig.1 ist eine Ansicht (Seitenansicht und Draufsicht) einer konventionellen Topfmaschine gemäß dem Stand der Technik.

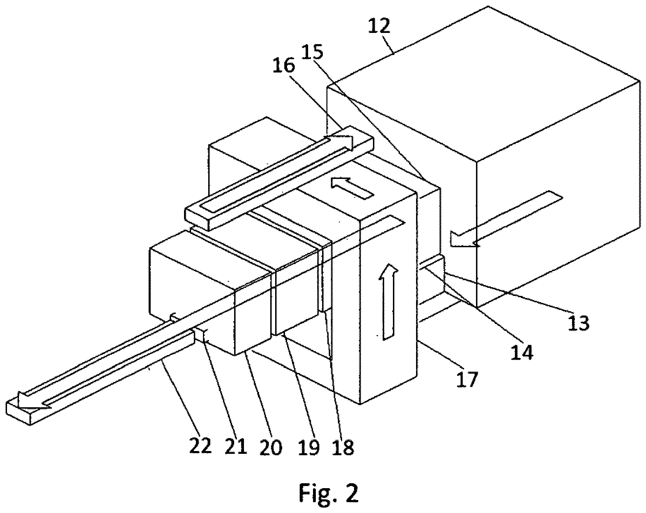

Fig.2 ist eine schematische Betriebsansicht einer linearkompakten Vorrichtung mit querlaufendem Substratelevator.
Fig.3 ist eine schematische Ansicht der Schaufel und des Substratbehälters.
Fig.4 ist eine Ansicht der linearkompakten Vorrichtung.
Fig.5 ist eine Ansicht der Vorrichtung mit den jeweiligen Erweiterungsräumen.
Fig.6 ist eine seitliche detaillierte Darstellung der Außenansicht der gesamten linearkompakten Vorrichtung, wobei die Türen zur Abschirmung der beweglichen Teile geschlossen sind.
Fig.7 ist eine seitliche detaillierte Darstellung der Außenansicht der gesamten linearkompakten Vorrichtung, wobei die Türen zur Abschirmung der beweglichen Teile geöffnet sind.
Fig.8 ist eine Seitenansicht des Außengestells.

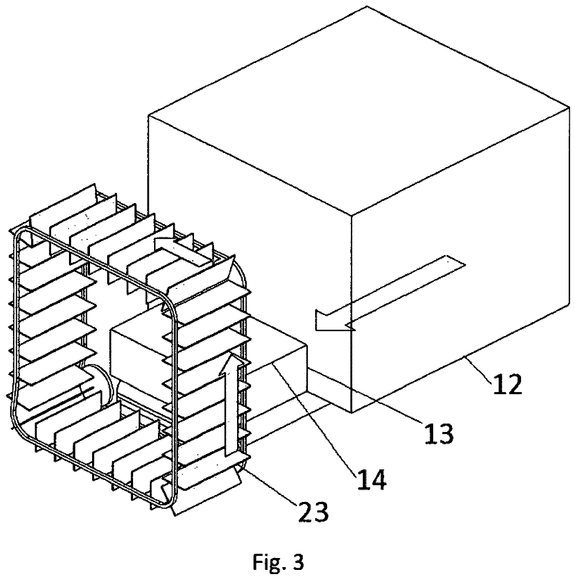

Gemäß der vorliegenden Erfindung wird das Substrat von Schaufeln **23** einer linearkompakten Vorrichtung zum Befüllen und Bearbeiten von Töpfen nicht direkt aufgekratzt, sondern durch Einstellung der Laufrichtung der Elevatorschaufeln **23** quer zur Erdbewegungsrichtung des Substrates im Substratbehälter **12in** dem mittleren Bereich **15** des Elevators **17** geschüttet (Fig. 3). Die Messung der Substratmenge erfolgt vor dem Eintritt des Substrats im Elevator an der dafür ausgelegten Mündung des Substratbunkers **14** durch einen höhenregelbaren Schieber **13** und durch Messung der Bewegungsgeschwindigkeit des Substrates im Substratbehälter **12.** Die Breite des Substratbehälters **12** bleibt konstant.

In einer weiteren Ausführungsform der linearkompakten Vorrichtung zum Befüllen und Bearbeiten von Töpfen gemäß der vorliegenden Erfindung liegt der Elevator **17** in einer toroidalen Form vor und an der Hauptachse der linearkompakten Vorrichtung ist ein lineares Topftransportsystems angeordnet.

In einer weiteren Ausführungsform der linearkompakten Vorrichtung zum Befüllen und Bearbeiten von Töpfen gemäß der vorliegenden Erfindung liegt der Elevator **17** in einer toroidalen Form vor und in der Mitte der linearkompakten Vorrichtung ist ein Befüllungssystem **18** angeordnet.

In einer weiteren Ausführungsform der linearkompakten Vorrichtung zum Befüllen und Bearbeiten von Töpfen sind bewegliche Teile vollständig abgeschirmt. Die erfindungsgemäße Vorrichtung umfasst einen kompakten und linearsymmetrisch aufgebauten Arbeitsraum, der durch starke Volumenreduzierung mittels mechanischer Schutzelemente einfach und kostengünstig und vollständig abgeschirmt werden kann.

Der Begriff "vollständig" bzw. "vollständig abgeschirmt" bedeutet vorliegend, dass alle beweglichen Teile der Vorrichtung durch das Anbringen von Schutzelementen zum Schutz des Bedienpersonals so gesichert sind, dass keine gelösten Elemente der beweglichen Teile der Vorrichtung während des Betriebs durch die Schutzelemente austreten können, und dass ein unbeabsichtigter Zugang des Betriebspersonals zum Gefahrenbereich von beweglichen Teilen der Vorrichtung während des Betriebs verhindert wird, um das Verletzungsrisiko mit beispielsweise Schnittwunden, Abschürfungen, Einklemmen und/oder Abtrennen von Gliedmaßen durch bewegliche Teile der Vorrichtung zu minimieren. Wenn diese Schutzelemente mit Schaltern abgesicherte Türen sind, ist ein beidseitiger Zugang zu dem Arbeitsraum der Topfmaschine besonders erleichtert. Die vorliegende linearkompakte Vorrichtung gemäß der Erfindung weist einen niedrigen Platzbedarf und eine sehr hohe Arbeitssicherheit auf, die nach dem CE-Konformitätsverfahren durch sehr niedrige Restrisiken erreicht wird. Die Pflanzen werden außerhalb der Topffüllmaschine, auf einem Band **22** manuell oder automatisiert in die mit Erde befüllten Töpfe gesetzt.

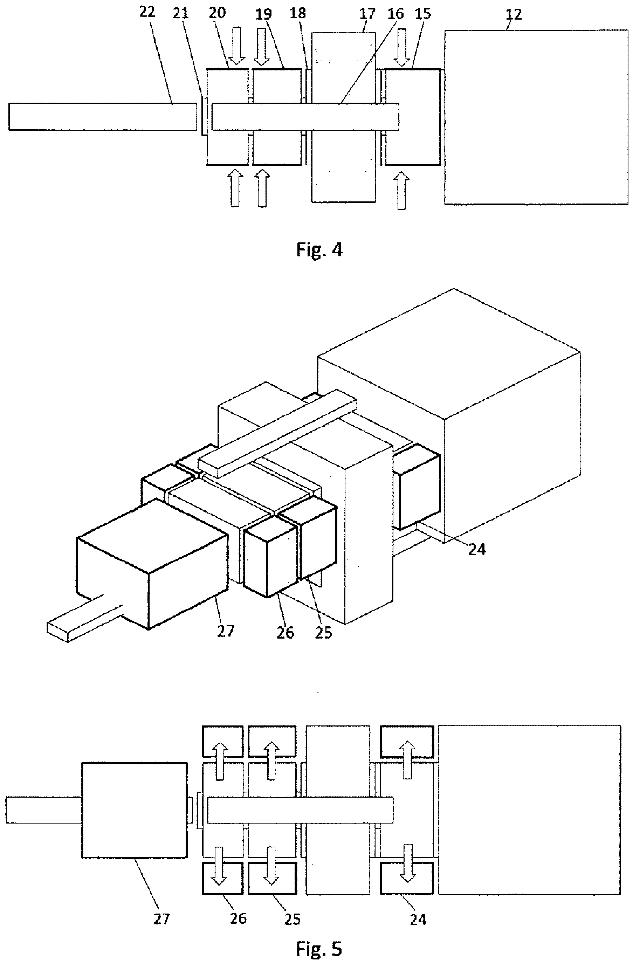

Eine weitere Ausführungsform der linearkompakten Vorrichtung zum Befüllen und Bearbeiten von Töpfen umfasst dass das beidseitig zugängliche Transportsystem kompatibel ist mit den Erweiterungsräumen **24, 25, 26, 27.** Die Vorrichtung weist an beiden Seiten des linear gestalteten Arbeitsraumes Raum für weitere zusätzliche, erweiterte oder weiterentwickelte Module, wie beispielsweise **24, 25, 26, 27,** auf. Damit ist die Integration der linearkompakten Topffüllmaschine in komplexe Produktionsanlagen und innenbetriebliche Transportsysteme in Gartenbaubetrieben ermöglicht und erleichtert (Fig. 5).

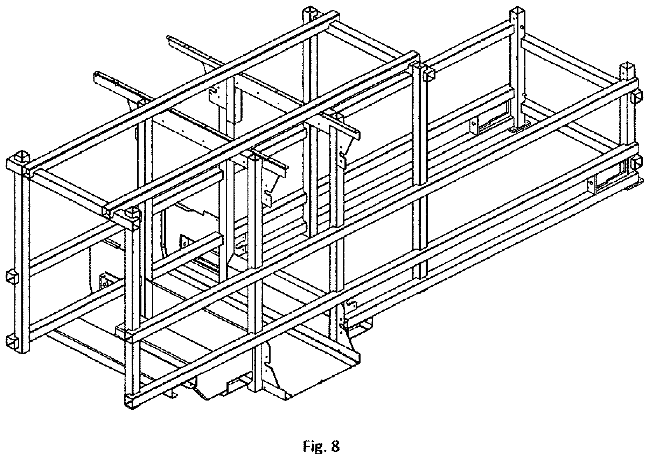

Eine weitere Ausführungsform der linearkompakten Vorrichtung zum Befüllen und Bearbeiten von Töpfen umfasst ein Außengestell, woran Bearbeitungsmodule intern und Schutzelemente extern befestigt sind. Die Vorrichtung weist ein Außengestell aus Stahl oder Aluminium auf, das die Gesamtkonstruktion trägt und deren Stabilität massiv erhöht. Dieses Außengestell bildet den äußeren Bereich der Topffüllmaschine, wodurch die Stabilität der Konstruktion erhöht wird, und bietet Befestigungspunkte für die einzubauenden Bearbeitungsmodule, Schutzelemente, und im Falle eines Hohlprofilgestelles, die geschützte und geordnete Führung von Pneumatik-Schläuchen oder Elektrokabeln (Fig. 8).

Eine weitere Ausführungsform der linearkompakten Vorrichtung zum Befüllen und Bearbeiten von Töpfen gemäß der vorliegenden Erfindung ist dadurch charakterisiert, dass das Außengestell beidseitig mechanische und elektropneumatische Anschlussmöglichkeiten für eine oder mehrere kompatible Maschinen umfasst, wobei die Maschinen Erdmischer, Erdbehälter, Erdtransportvorrichtungen, Pflanzroboter, Topfsammler, Absetzer, Verpackungsmaschinen umfassen.

Die linearkompakte Vorrichtung mit querlaufendem Substratelevator zum Befüllen und Bearbeiten von Töpfen gemäß der vorliegenden Erfindung umfasst einzelne, miteinander mechanisch und/oder elektropneumatisch verbundene Hauptteile: eine mechanische Struktur (Topfzelle), umfassend Technik, Antriebe, Bearbeitungsstationen, Topfbahn **21** und Steuerung; und einen Erdbehälter variabel wählbarer Länge und Kapazität, der mit der Topfzelle verbunden ist. Der Vorderbereich der linearkompakten Vorrichtung umfasst die gesamte Technik und wird als sogenannte Topfzelle bezeichnet. Diese Topfzelle ist kompakt gestaltet, weist eine hohe mechanische Stabilität auf und ist dadurch als Transportvorrichtung für die empfindliche Technik geeignet. Der Erdbehälter ist beliebig gestaltbar und wird hinten an die Topfzelle angedockt, wobei unterschiedliche Erdbehälter verwendet werden können, ohne die Technik der Topfzelle zu verändern.

Die linearkompakte Vorrichtung mit querlaufendem Substratelevator zum Befüllen und Bearbeiten von Töpfen gemäß der vorliegenden Erfindung umfasst Voreinstellungen für unterschiedliche Topfgrößen und Formen, die in der Steuerung der Topfmaschine gespeichert sind; dafür hinterlegte Programme (SW), die per Knopfdruck abrufbar sind und umfassen, aber nicht beschränkt sind auf: eingestellte Leistung, dazugehöriger Erdnachschub, Bohrtiefe, Bohrprogramm.

Die linearkompakte Vorrichtung mit querlaufendem Substratelevator zum Befüllen und Bearbeiten von Töpfen gemäß der vorliegenden Erfindung ist mit einem direkt an die Maschine angeschlossenen und/oder externen 3D-Scanner verbunden, der durch Scannung eines Topfes die Form und Maße des Topfes an die SW der Maschine sendet, die die zur Bearbeitung notwendigen Voreinstellungen berechnet und diese auf Wunsch im Speicher der Steuerung speichert. Die mechanische Konstruktion ermöglicht durch die Speicherung bestimmter Bearbeitungsparameter, die für die Bearbeitung eines Topfes notwendig sind, eine volle Automatisierung des Topffüllprozesses. Die Programme (SW) werden von der Vorrichtung nach bestimmten vorprogrammierten Algorithmen berechnet und durchgeführt. Dafür werden Daten über einem Topf, wie beispielsweise Topfmaß und Topfvolumen von der Vorrichtung, beispielsweise mittels angeschlossenem und/oder externen 3D-Scanner, ermittelt, um das pro Topf benötigte Erdvolumen zu bestimmen.

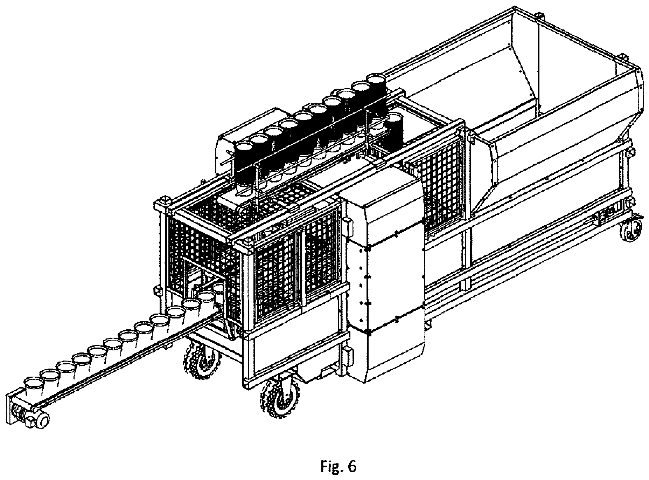

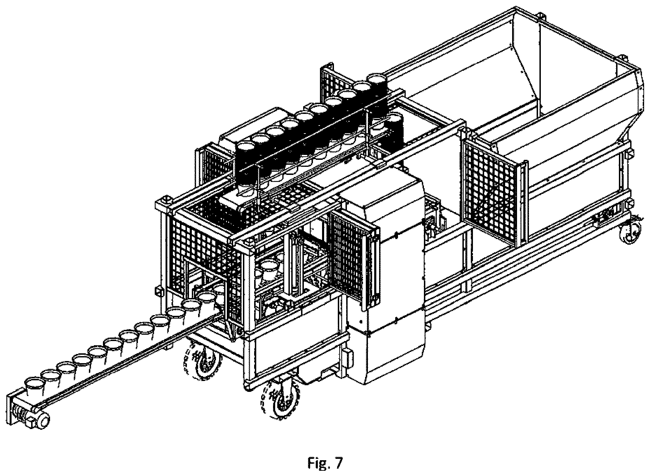

Das in Fig. 6 und Fig. 7 dargestellte Anwendungsbeispiel einer linearkompakten Vorrichtung mit querlaufendem Substratelevator zum Befüllen und Bearbeiten von Töpfen verdeutlicht die Vorteile des Einsatzes der Erfindung in der Praxis wie folgt:

Die räumliche Anordnung der benötigten Arbeitsbereiche **22** der Topffüllmaschine gemäß der vorliegenden Erfindung ermöglicht eine neue und zukunftsorientierte Struktur und Konstruktionsweise. Somit können Topfmaschinenfamilien aufgebaut werden, deren Produktionsstraße stark vereinheitlicht, rationalisiert und kostengünstig aufgebaut werden kann.

Die vorliegende Erfindung ermöglicht eine neue Perspektive für den Einsatz moderner Steuerungstechnik bei Topffüllmaschinen und begünstigt den Einsatz von Verkabelungen und geschützten Kabelbäumen durch optimal platzierte Schaltschränke und Kabelführungen.

Eine weitere Ausführungsform der linearkompakten Vorrichtung mit querlaufendem Substratelevator zum Befüllen und Bearbeiten von Töpfen ist dadurch gekennzeichnet, dass alle Teile der linear angeordneten Vorrichtung beidseitig zugänglich sind. Durch die lineare Anordnung der Module der Topffüllmaschine ist das Erscheinungsbild der erfindungsgemäßen Vorrichtung vereinfacht. Dies führt zu einer leichten Bedienbarkeit und somit zu einem verbesserten Arbeitsschutz des Bedienpersonals. Die erfindungsgemäße Vorrichtung ist günstiger herstellbar als die Vorgängermodelle des Stands der Technik.

Bestimmte Ausführungsformen wurden erläutert, doch versteht es sich, dass sie nicht auf das Beschriebene beschränkt sind und weitere Änderungen und Variationen vorgenommen werden können. Die Erfindung wird durch den Schutzumfang der Ansprüche definiert.

### Bezugszeichenliste

**1** Substratbehälter
**2** Elevator
**3** Topftransportsystem
**4** Topfmagazin
**5** Bandspeicher
**6** Füllbereich
**7** Bohrbereich
**8** Düngerdosiergerät
**9** Arbeitsbereich an der Topffüllmaschine
**10** Topfübergabe
**11** Topftransportband
**12** Substratbehälter
**13** Schieber
**14** Mündung Substratbehälter
**15** Topfmagazinbereich
**16** Bandspeicherbereich
**17** Bereich des Elevators
**18** Füllbereich
**19** Bohrbereich
**20** Bereich des Düngerdosiergerätes
**21** lineare Topfbahn
**22** Topftransportband und Arbeitsbereich zum Topfen
**23** Schaufel
**24** Erweiterungsraum Magazin
**25** Erweiterungsraum Bohrer
**26** Erweiterungsraum des Düngerdosiergerätes.
**27** Erweiterungsraum für die Pflanzmaschine

## Patentansprüche

1. Linearkompakte Vorrichtung mit querlaufendem Substratelevator zum Befüllen und Bearbeiten von Töpfen, wobei die Laufrichtung der Elevatorschaufeln **(23)** im Winkel von 5° bis 175° zur Bewegungsrichtung des Substrates im Substratbehälter **(12)** gerichtet ist, **dadurch gekennzeichnet, dass** die Substratmenge vor dem Eintritt des Substrats in den Elevator **(17)** an der dafür ausgelegten Mündung des Substratbehälters **(14)** durch einen höhenregelbaren Schieber **(13)** und durch Messung der Bewegungsgeschwindigkeit des Substrates im Substratbehälter **(12)** gemessen wird.

2. Linearkompakte Vorrichtung mit querlaufendem Substratelevator zum Befüllen und Bearbeiten von Töpfen nach Anspruch 1,
**dadurch gekennzeichnet, dass** der Elevator **(17)** in einer toroidalen Form ausgestaltet ist und Substrat vom Substratbehälter **(12)** in den Elevator **(17)** einschüttbar ist.

3. Linearkompakte Vorrichtung mit querlaufendem Substratelevator zum Befüllen und Bearbeiten von Töpfen nach einem der vorhergehenden Ansprüche,
**dadurch gekennzeichnet, dass** das Transportband des Substratbehälters **(12)** höher angeordnet ist als der Boden des Elevators **(17).**

4. Linearkompakte Vorrichtung mit querlaufendem Substratelevator zum Befüllen und Bearbeiten von Töpfen nach einem der vorhergehenden Ansprüche,
**dadurch gekennzeichnet, dass** der Substratbehälter **(12)** einen fixierten oder vertikal oder horizontal einstellbaren Schieber **(13)** für die Dosierung der Substratmenge umfasst.

5. Linearkompakte Vorrichtung mit querlaufendem Substratelevator zum Befüllen und Bearbeiten von Töpfen nach einem der vorhergehenden Ansprüche,
**dadurch gekennzeichnet, dass** der Elevator **(17)** in einer toroidalen Form vorliegt, und an der Hauptachse der linearkompakten Vorrichtung ein lineares Topftransportsystems angeordnet ist.

6. Linearkompakte Vorrichtung mit querlaufendem Substratelevator zum Befüllen und Bearbeiten von Töpfen nach einem der vorhergehenden Ansprüche,
**dadurch gekennzeichnet, dass** der Elevator **(12)** in einer toroidalen Form vorliegt und in der Mitte der linearkompakten Vorrichtung ein Befüllungssystem **(18)** angeordnet ist.

7. Linearkompakte Vorrichtung mit querlaufendem Substratelevator zum Befüllen und Bearbeiten von Töpfen nach einem der vorgehenden Ansprüche,
**dadurch gekennzeichnet, dass** alle Teile der linear angeordneten Vorrichtung beidseitig zugänglich sind.

8. Linearkompakte Vorrichtung mit querlaufendem Substratelevator zum Befüllen und Bearbeiten von Töpfen nach einem der vorhergehenden Ansprüche,
**dadurch gekennzeichnet, dass** bewegliche Teile vollständig abgeschirmt sind.

9. Linearkompakte Vorrichtung mit querlaufendem Substratelevator zum Befüllen und Bearbeiten von Töpfen nach einem der vorhergehenden Ansprüche,
**dadurch gekennzeichnet, dass** das lineare und beidseitig zugängliche Topftransportsystem kompatibel mit Erweiterungsräumen **(24, 25, 26, 27)** ist.

10. Linearkompakte Vorrichtung mit querlaufendem Substratelevator zum Befüllen und Bearbeiten von Töpfen nach einem der vorhergehenden Ansprüche,
**dadurch gekennzeichnet, dass** ein Außengestell vorgesehen ist, woran Bearbeitungsmodule intern und Schutzelemente extern befestigt sind.

11. Linearkompakte Vorrichtung mit querlaufendem Substratelevator zum Befüllen und Bearbeiten von Töpfen nach einem der vorhergehenden Ansprüche,
**dadurch gekennzeichnet, dass** das Außengestell beidseitig mechanische und elektropneumatische Anschlussmöglichkeiten für eine oder mehrere kompatible Maschinen umfasst, wobei die Maschinen Substratmischer, Substratbehälter, Substrattransportvorrichtungen, Pflanzroboter, Topfsammler, Absetzer, Verpackungsmaschinen umfassen.

12. Linearkompakte Vorrichtung mit querlaufendem Substratelevator zum Befüllen und Bearbeiten von Töpfen nach einem der vorhergehenden Ansprüche,
**dadurch gekennzeichnet, dass** die Vorrichtung aus einzelnen, miteinander mechanisch und/oder elektropneumatisch verbundenen Hauptteilen besteht umfassend:
a) eine mechanische Struktur (Topfzelle), umfassend Technik, Antriebe, Bearbeitungsstationen, Topfbahn und Steuerung; und
b) einem Substratbehälter variabel wählbarer Länge und Kapazität, der mit der Topfzelle verbunden ist.

13. Linearkompakte Vorrichtung mit querlaufendem Substratelevator zum Befüllen und Bearbeiten von Töpfen nach einem der vorhergehenden Ansprüche,
**dadurch gekennzeichnet, dass** eine Topfmaschine mit einem direkt an die Maschine angeschlossenen und/oder externen 3D-Scanner verbunden ist.

## Claims

1. Linear compact device with transverse substrate elevator for filling and processing pots, the direction of travel of the elevator blades (23) being at an angle of 5° to 175° to the direction of movement of the substrate in the substrate container (12),
**characterized in that** the amount of substrate is measured before the substrate enters the elevator (17) at the mouth of the substrate container (14) designed for this purpose by a height-adjustable slide (13) and by measuring the speed of movement of the substrate in the substrate container (12).

2. Linear compact device with transverse substrate elevator for filling and processing pots according to claim 1,
**characterized in that** the elevator (17) is designed in a toroidal shape and substrate can be poured from the substrate container (12) into the elevator (17).

3. Linear compact device with transverse substrate elevator for filling and processing pots according to one of the preceding claims,
**characterized in that** the conveyor belt of the substrate container (12) is arranged higher than the bottom of the elevator (17).

4. Linear compact device with transverse substrate elevator for filling and processing pots according to any one of the preceding claims,
**characterized in that** the substrate container (12) comprises a fixed or vertically or horizontally adjustable slide (13) for dosing the amount of substrate.

5. Linear compact device with transverse substrate elevator for filling and processing pots according to any one of the preceding claims,
**characterized in that** the elevator (17) is in a toroidal shape and a linear pot transport system is arranged on the main axis of the linear compact device.

6. Transverse substrate elevator linear compact device for filling and processing pots according to any one of the preceding claims,
**characterized in that** the elevator (12) is in a toroidal shape and a filling system (18) is arranged in the middle of the linear compact device.

7. Linear compact device with transverse substrate elevator for filling and processing pots according to any one of the preceding claims,
**characterized in that** all parts of the linearly arranged device are accessible from both sides.

8. Linear compact device with transverse substrate elevator for filling and processing pots according to any one of the preceding claims,
**characterized in that** moving parts are completely shielded.

9. Linear compact device with transverse substrate elevator for filling and processing pots according to any one of the preceding claims,
**characterized in that** the linear and accessible from both sides pot transport system is compatible with extension spaces (24, 25, 26, 27).

10. Linear compact device with transverse substrate elevator for filling and processing pots according to any one of the preceding claims,
**characterized in that** an external frame is provided, to which processing modules are internally fixed and protective elements are externally fixed.

11. Linear compact device with transverse substrate elevator for filling and processing pots according to any one of the preceding claims,
**characterized in that** the outer frame has mechanical and electro pneumatic connection options on both sides for one or more compatible machines, the machines comprising substrate mixers, substrate containers, substrate transport devices, planting robots, pot collectors, spreaders, packaging machines.

12. Linear compact device with transverse substrate elevator for filling and processing pots according to any one of the preceding claims,
**characterized in that** the device consists of individual main parts mechanically and/or electro-pneumatically connected to one another, comprising:
a) a mechanical structure (pot cell), comprising technology, drives, processing stations, pot track and controller; and
b) a substrate container of variably selectable length and capacity, which is connected to the pot cell.

13. Linear compact device with transverse substrate elevator for filling and processing pots according to any one of the preceding claims,
**characterized in that** a potting machine is connected to a 3D scanner directly connected to the machine and/or external.

## Revendications

1. Dispositif linéaire compact pourvu d'un élévateur de substrat transversal destiné au remplissage et au traitement de pots, le sens de marche des aubes d'élévateur (23) étant dirigé selon un angle de 5° à 175° par rapport au sens de déplacement du substrat dans le réservoir à substrat (12),
**caractérisé en ce que** la quantité de substrat est mesurée avant l'entrée du substrat dans l'élévateur (17) à l'embouchure conçue à cet effet du réservoir à substrat (14) par un distributeur (13) réglable en hauteur et par la mesure de la vitesse de déplacement du substrat dans le réservoir à substrat (12).

2. Dispositif linéaire compact pourvu d'un élévateur de substrat transversal destiné au remplissage et au traitement de pots selon la revendication 1,
**caractérisé en ce que** l'élévateur (17) est configuré de forme toroïdale et du substrat peut être versé du réservoir à substrat (12) dans l'élévateur (17).

3. Dispositif linéaire compact pourvu d'un élévateur de substrat transversal destiné au remplissage et au traitement de pots selon l'une des revendications précédentes,
**caractérisé en ce que** la bande de transport du réservoir à substrat (12) est disposée plus haut que le fond de l'élévateur (17) .

4. Dispositif linéaire compact pourvu d'un élévateur de substrat transversal destiné au remplissage et au traitement de pots selon l'une des revendications précédentes,
**caractérisé en ce que** le réservoir à substrat (12) comprend un distributeur (13) fixe ou réglable verticalement ou horizontalement pour le dosage de la quantité de substrat.

5. Dispositif linéaire compact pourvu d'un élévateur de substrat transversal destiné au remplissage et au traitement de pots selon l'une des revendications précédentes,
**caractérisé en ce que** l'élévateur (17) se présente sous une forme toroïdale et un système de transport de pots linéaire est disposé sur l'axe principal du dispositif linéaire compact.

6. Dispositif linéaire compact pourvu d'un élévateur de substrat transversal destiné au remplissage et au traitement de pots selon l'une des revendications précédentes,
**caractérisé en ce que** l'élévateur (12) se présente sous une forme toroïdale et un système de remplissage (18) est disposé au centre du dispositif linéaire compact.

7. Dispositif linéaire compact pourvu d'un élévateur de substrat transversal destiné au remplissage et au traitement de pots selon l'une des revendications précédentes,
**caractérisé en ce que** toutes les parties du dispositif disposé de manière linéaire sont accessibles des deux côtés.

8. Dispositif linéaire compact pourvu d'un élévateur de substrat transversal destiné au remplissage et au traitement de pots selon l'une des revendications précédentes,
**caractérisé en ce que** les parties mobiles sont entièrement protégées.

9. Dispositif linéaire compact pourvu d'un élévateur de substrat transversal destiné au remplissage et au traitement de pots selon l'une des revendications précédentes,
**caractérisé en ce que** le système de transport de pots linéaire et accessible des deux côtés est compatible avec des espaces d'extension (24, 25, 26, 27).

10. Dispositif linéaire compact pourvu d'un élévateur de substrat transversal destiné au remplissage et au traitement de pots selon l'une des revendications précédentes,
**caractérisé en ce qu'**un bâti extérieur est prévu, auquel sont fixés des modules de traitement à l'intérieur et des éléments de protection à l'extérieur.

11. Dispositif linéaire compact pourvu d'un élévateur de substrat transversal destiné au remplissage et au traitement de pots selon l'une des revendications précédentes,
**caractérisé en ce que** le bâti extérieur comprend des deux côtés des possibilités de raccordement mécanique et électropneumatique pour une ou plusieurs machines compatibles, les machines comprenant des mélangeurs de substrat, réservoirs à substrat, dispositifs de transport de substrat, robots de plantation, collecteurs de pots, appareils déposeurs, machines d'emballage.

12. Dispositif linéaire compact pourvu d'un élévateur de substrat transversal destiné au remplissage et au traitement de pots selon l'une des revendications précédentes,
**caractérisé en ce que** le dispositif est constitué de parties principales individuelles, reliées les unes aux autres de manière mécanique et/ou électropneumatique, comprenant :
a) une structure mécanique (cellule de pots), comprenant la technologie, les entraînements, les postes de traitement, la table de pots et la commande ; et
b) un réservoir à substrat de longueur et de capacité pouvant être choisies de manière variable, qui est relié à la cellule de pots.

13. Dispositif linéaire compact pourvu d'un élévateur de substrat transversal destiné au remplissage et au traitement de pots selon l'une des revendications précédentes,
**caractérisé en ce qu'**une machine à rempoter est reliée à un scanner 3D raccordé directement à la machine et/ou externe.
